# EUROPEAN PATENT APPLICATION

(11) **EP 4 660 171 A1**
(43) Date of publication of application: **10.12.2025**
(21) Application number: 24201639.2
(22) Date of filing: 20.09.2024
(51) Int. Cl.: C04B 35/573, C04B 35/563

(54) **SI-FREE REACTION BONDED SIC**

(30) Priority: 06.06.2024 US 202418735560
(71) Applicant: II-VI Delaware, Inc., Wilmington, DE 19890 (US)
(72) Inventor: WANG, Jiwen, Wilmington, 19890 (US); SALAMONE, Samuel, Wilmington, 19890 (US); AGHAJANIAN, Michael, Wilmington, 19890 (US)
(74) Representative: Schmidt, Christian

(57) **Abstract**

A method of making reaction bonded silicon carbide (RB-SiC) material with low residual Si comprising:
producing a SiC + carbon preform that includes diamond powder;
infiltrating said preform with molten Si to produce an infiltrated preform; and
maintaining said infiltrated preform in a furnace allowing the Si + Diamond + SiC reaction to occur.

## Description

### CROSS-REFERENCE TO RELATED APPLICATIONS/INCORPORATION BY REFERENCE

N/A

### FIELD

Aspects of the present disclosure relate to reaction bonded SiC ceramic components. More specifically, certain embodiments of the disclosure relate to reaction bonded silicon carbide (RB-SiC) ceramic components made utilizing diamond powder and having low residual Si.

### BACKGROUND

Conventional approaches for making ceramic components may have issues related to one or more of cost, size and shape capability, purity, grain size, properties, etc.

Further limitations and disadvantages of conventional and traditional approaches will become apparent to one of skill in the art, through comparison of such systems with some aspects of the present disclosure as set forth in the remainder of the present application with reference to the drawings.

### BRIEF SUMMARY

A system and/or method for making ceramic components utilizing diamond powder, substantially as shown in and/or described in connection with at least one of the figures, as set forth more completely in the claims.

These and other advantages, aspects and novel features of the present disclosure, as well as details of an illustrated embodiment thereof, will be more fully understood from the following description and drawings.

### BRIEF DESCRIPTION OF SEVERAL VIEWS OF THE DRAWINGS

FIG. 1 is a diagram of reaction bonded silicon carbide (RB-SiC), in accordance with an example embodiment of the disclosure.
FIG. 2 shows example RB-SiC microstructures, in accordance with an example embodiment of the disclosure.
FIG. 3 is a diagram of the disclosed reaction bonding process with diamond powder in the preform, in accordance with an example embodiment of the disclosure.
FIG. 4 is a table showing the characteristics of various forms of carbon, in accordance with an example embodiment of the disclosure.
FIG. 5 shows two samples of "Si-free" RB-SiC, in accordance with an example embodiment of the disclosure.
FIG. 6 illustrates phase analysis using ImageJ for "Si-free" RB-SiC, in accordance with an example embodiment of the disclosure.
FIG. 7 is a diagram of reaction bonded boron carbide (RB-B4C), in accordance with an example embodiment of the disclosure.
FIG. 8 shows example RB-B4C microstructures, in accordance with an example embodiment of the disclosure.
FIG. 9 shows example applications for RB-B4C, in accordance with an example embodiment of the disclosure.

### DETAILED DESCRIPTION

Reaction bonded silicon carbide (RB-SiC) ceramic components are important in a variety of industries. Example components include, but are not limited to, high purity, corrosion resistance semiconductor processing components (e.g., chamber liners, furnace components, shower heads, focus rings); armor tiles; industrial wear and refractory components; corrosion resistant valves and structures for mining, petro-chem, oil and gas exploration, etc.; and directly polishable high energy laser mirrors.

Traditional methods to form "pure" SiC include: sintering; hot pressing; and CVD. These methods are limited in many aspects, including cost, size and shape capability, purity, grain size, properties, etc. Reaction bonded SiC (aka SiSiC) has attractive size and shape capability, cost, purity, tailorability, etc. However, the presence of the residual Si phase limits uses in areas such as high temperature, corrosion, direct polishing, armor, wear, etc.

Reaction Bonded SiC (aka RB-SiC or SiSiC) has many positive attributes. Compared to conventionally processed SiC (sintered, hot pressed, CVD), reaction bonded SiC can be made in complex shapes (no shrinkage) and large sizes, it can be tailored (properties, grain size, additional phases), it can be produced in high purity, and it has attractive process economics (e.g., relatively low process temperature). However, RB-SiC frequently contains a residual Si phase, owing to the infiltration process that is utilized. The presence of the Si phase limits use in various applications, including semiconductor etch, high temperature, corrosion, wear, armor, directly polished mirrors, etc.

The existing approach for applications where "pure" ("Si-free") SiC is required is to use sintered, hot pressed or CVD forms of SiC. These processes all have issues. Sintered SiC has 20% process shrinkage, which limits size and shape capability. Moreover, sintered SiC contains impurities (sintering aids). Finally sintered SiC is processed at high temperature (> 2000°C vs. ~1500°C for RB), which leads to high cost. Hot pressed SiC is formed by high temperature pressing of SiC powders. This process is capital intensive, costly and has very limited size and shape capability. CVD SiC is formed by converting MTS (methyltrichlorosilane) gas to SiC in a reactor and slowly growing a structure layer by layer. This process is slow, costly and extremely limited with respect to size and shape.

A "Si-free" version of Si (e.g. little to no residual Si phase) would have value in many markets where these is a need for attractive cost, significant size and shape capability and the attributes provided by a pure SiC microstructure.

RB-SiC must have a continuous network of Si to allow the infiltration process to function. The minimum possible Si content is nominally 8-10%. This disclosure presents a method of producing a RB-SiC ceramic with a low or nominally zero residual Si by using a preform with SiC plus a small amount of diamond powder. In some embodiments this is a 2-step process: (1) Infiltrate a preform with molten Si under conditions where Si + Diamond reaction will be slow to create an infiltrated preform; (2) Maintain an infiltrated preform in a furnace and allow Si + Diamond → SiC reaction to occur, thus eliminating all Si from microstructure. For step (2) the rate of reaction depends on the temperature and the diamond particle size (surface area). Reaction time ranges may be less than 10 hours, less than 8 hours or less than 5 hours; in some embodiments, the reaction time is from about 3 to 5 hours. Reaction temperature ranges may be about 1400°C to 1600°C; in some embodiments, the temperature range is from about 1450°C to 1550°C, about 1480°C to 1550°C or about 1500°C to 1550°C. Specific time at temperature depends on particle size. In some embodiments, for reaction times less than 10 hours, diamond particle size of less than 12 µm is needed. In other embodiments, diamond particle size of less than 8 µm allows both rapid reaction (less than 10 hrs) and also allows all diamond to react to SiC.

Because diamond is "high molecular weight" carbon, a large expansion occurs as it reacts to SiC allowing Si islands to be filled. Key advantages include one or more of: (1) Attractive features of RB process are maintained: Size, shape, cost, low process temp, tailorability, purity (no sintering aids), no process shrinkage, others; (2) Si-free microstructure is achieved for critical applications: Semiconductor-etch, wear, directly polishable HEL mirrors, furnace liners, oil and gas, petro-chem, corrosion, others; and/or (3) Microstructure can be tailored to meet application need (e.g., can maintain some residual diamond to increase hardness and/or thermal conductivity by starting with more than is needed to fully react Si phase to SiC).

In the disclosed method, a preform of SiC and diamond powder is fabricated. The preform can be a loose mix of the dry powders, or a consolidated body formed by casting pressing or other methods. Additionally, the reaction bonding occurs under vacuum (which would remove any oxygen or residual moisture such as from room humidity, etc.). In other embodiments, the reaction may be performed under inert atmosphere and/or in a humidity controlled environment.

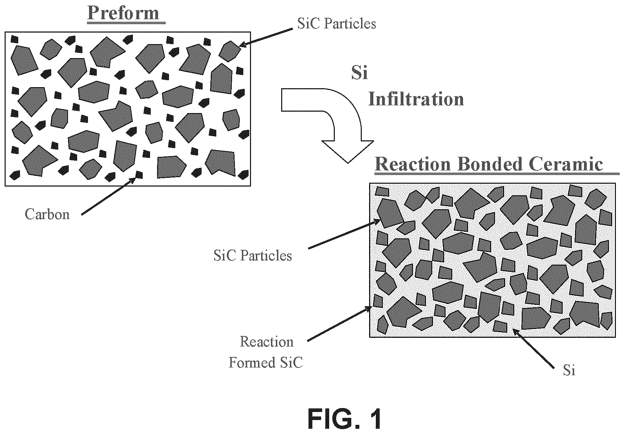

FIG. 1 is a diagram of conventional reaction bonded silicon carbide (RB-SiC, also called SiSiC). Referring to Figure 1, reaction bonded SiC ceramics are produced by the reactive infiltration of molten Si into preforms of SiC + carbon. Upon infiltration, the molten Si reacts with the carbon to form additional SiC (Si + C → SiC), bonding the structure together. The final composite consists of the original SiC, reaction formed SiC and residual Si. As discussed above, a minimum final Si content of 8-10 vol. % is necessary for the process to function (i.e., an interconnected continuous network of Si is required for the infiltration to proceed).

In the creation of reaction bonded silicon carbide (RB-SiC) ceramic materials as described herein, preforms are utilized. Many different preform processes exist (casting, pressing, etc.). In one embodiment of the present work, the preform is created with a slurry (SiC + C based binder + Deionized H₂O) which is formed into the desired shape, including both internal and external features. The preforms can be made as green parts that are then reaction bonded (infiltrated with Si) to end up with a finished ceramic component.

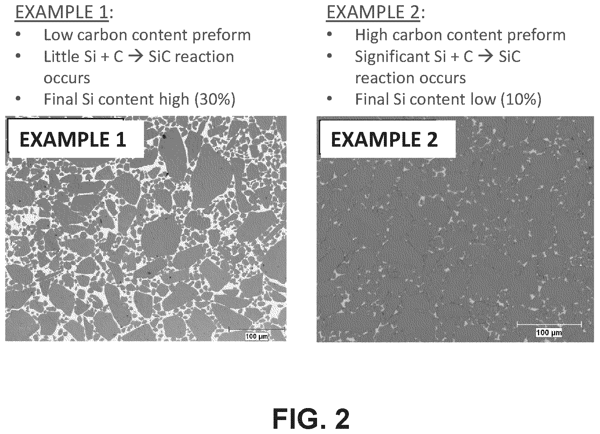

Differences can be seen in the microstructures of two examples of reaction bonded SiC shown in FIG. 2. In Example 1, the preform has a low carbon content, thus little Si + C → SiC reaction occurs and the final Si content is high (30%). In Example 2, the preform has a high carbon content, thus significant Si + C → SiC reaction occurs and the final Si content low (10%). Properties are listed in Table 1 below for both Examples 1 and 2 (see FIG. 2).

**Table 1**

| **Property** | **Example 1** | **Example 2** |
|---|---|---|
| Nom. SiC:Si Ratio | 70:30 | 90:10 |
| Density (g/cc) | 2.95 | 3.12 |
| Young's Modulus (GPa) | 350 | 410 |
| CTE, 20-100°C (ppm/K) | 2.9 | 2.7 |
| Thermal Cond. (W/m-K) | 170 | 190 |
| Flexural Strength (MPa) | 270 | 280 |
| Knoop 2 kg Hardness (kg/mm²) | 1100 | 1500 |

In the present disclosure, methods are disclosed to create reaction bonded silicon carbide (RB-SiC) ceramic components with a low residual Si phase (e.g. nominally "Si-free") by utilization of diamond powder in the preform. Due to very high expansion as diamond reacts to form SiC, a low residual Si content component is produced. In some embodiments, the Si content is 10% by weight of silicon or less; in other embodiments, the Si content is 5% by weight of silicon or less, 3% by weight of silicon or less, 2% by weight of silicon or less or 1% by weight of silicon or less. In some embodiments, low residual Si correlates to no detectable Si remaining. Varying the time and temperature of processing can produce different results.

Applications for low residual Si content materials include high temperature, corrosion and wear applications (as a sintered SiC replacement); process semiconductor applications (as a CVD SiC replacement for focus rings and showerheads); and directly polishable HEL mirrors (typically, RB-SiC is difficult to optically polish due to presence of soft Si phase).

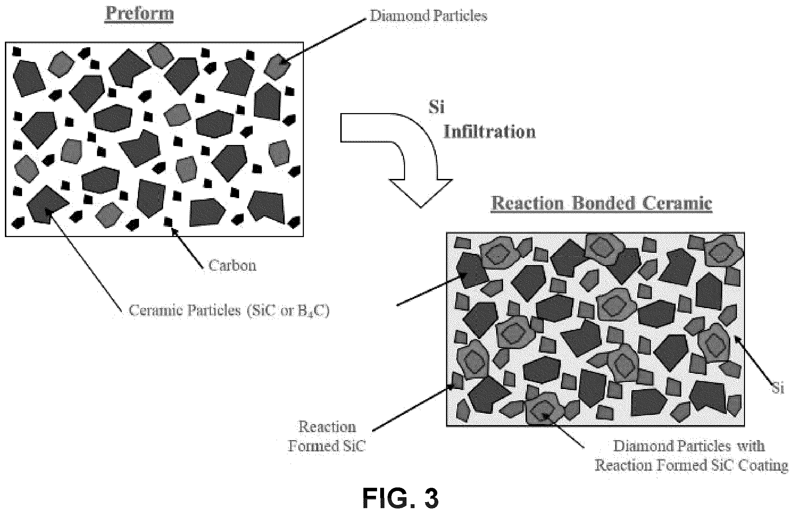

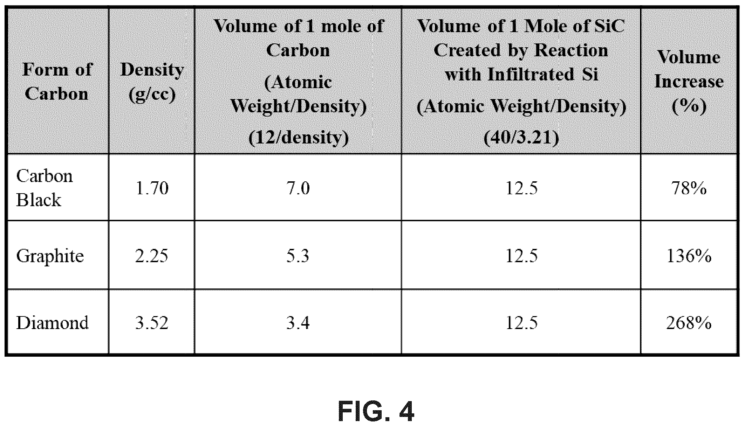

FIG. 3 is a diagram of the reaction bonding process as disclosed herein utilizing diamond powder in the preform. Referring to Figure 3, since diamond is high molecular weight "carbon" (see Fig. 4), the Si + Diamond → SiC reaction is highly expansive (i.e., reaction formed SiC can fill voids in preform). Also since diamond is high molecular weight "carbon", the Si + Diamond → SiC reaction is slow, thus allowing infiltration of the preform to occur, following which, reaction occurs. If the starting diamond powder in the preform has a small particle size, it can be fully reacted to SiC during the process, this creating "Si-free" reaction bonded SiC. FIG. 3 also shows ceramic particles such as SiC and/or B₄C can be used in the preform. See further discussion below.

In some embodiments, the particle size of the diamond is in the range of about 5 µm to about 12 µm. At about ≤ 8 µm all diamond can be reacted away, while at above about 8 µm or greater a "halo" is formed, as discussed below. Particle size measurement may include measurements of particle diameter. Particle size measurements may be made by laser scattering by ASTM D4464.

Also shown in FIG. 3 is the diamond particles with a reaction formed SiC coating ("halo"). If the diamond particle is small enough, the coating ("halo") can encompass the entire particle. Again, a small amount of diamond can result in a large amount of SiC because of the volume of expansion. In the present disclosure, it is preferred to react most, if not all, of the diamond to result in a monolithic structure. Monolithic structures are preferred for ease in machining, etc. If there is too much diamond, then excess will remain and the material with then be difficult to machine. Thus, in the disclosed materials, both low Si and low residual diamond is preferred. However, in some embodiments, a slightly higher, controlled amount of diamond may be left in the material to provide desirable properties such as increased hardness.

In general, preforms with high carbon levels lead to reaction bonded ceramics with little residual Si phase because Si + C → SiC reaction is expansive. Carbon can exist in several forms, such as carbon black, graphite and diamond. Diamond is a high density form of carbon and given a specific volume contains more moles of carbon with respect to other forms of carbon. Thus, expansion (volume increase) upon Si + Diamond → SiC reaction is high. The supply of silicon is in excess of what the diamond can react with. Again, because starting density of diamond is high, conversion to SiC results in very large volume expansion. This leads to low Si content in the reaction bonded ceramic.

FIG. 4 is a table showing the characteristics of various forms of carbon. In some embodiments, diamond is the preferred form of carbon based on the expansive reaction profile described herein.

In addition to solid forms of carbon (i.e. diamond powder), solutions of organic materials can be used to add additional carbon into the material before the reaction. Materials for use in adding additional carbon can be solutions of food starches, such as fructose. In addition to food starches, other sources of additional carbon include alcohols such as furfuryl alcohol and phenolic resins. Preferred organic materials are inexpensive, safe and/or easy to dissolve in water. The additional carbon may be added by soaking the preform in a solution of the organic material.

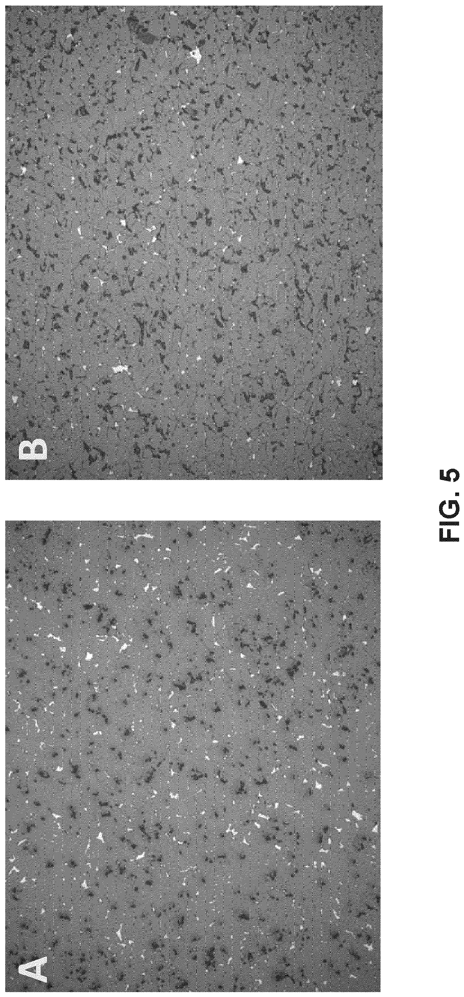

FIG. 5 shows two samples (A and B) of the creation of "Si-free" RB-SiC in accordance with the present disclosure. In Sample A: The preform is 88 wt% SiC powder + 12 wt% 12 µm diamond powder. The reaction bonding process includes molten Si infiltration held in a furnace at 1500°C (held 3.3 hrs vs. standard 1 hr). The resulting material has an approximate 2 vol% residual Si and an approximate 3 vol% residual diamond. (ImageJ is used for phase analysis). The material has the properties of 3.19 g/cc density and 433 GPa Young's modulus (vs. 3.21 and 450 for pure SiC). In Sample B: The process is the same as in example A, but the preform is back-soaked with 70% fructose solution prior to infiltration to add additional carbon. The resulting material has an approximate 1 vol% residual Si and an approximate 4 vol% of residual diamond (by ImageJ). The material has the properties of 3.15 g/cc density, 435 GPa Young's modulus.

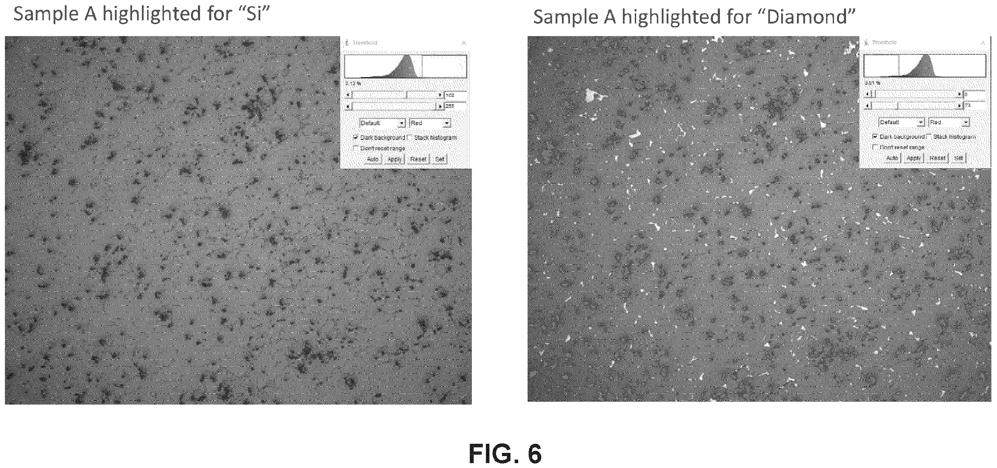

FIG. 6 illustrates phase analysis using ImageJ for "Si-free" RB-SiC, specifically for sample A above. Both the Si and the diamond phases are shown. ImageJ is an open source software that does phase analysis by gray scales. Here, SEM images were taken and the software was used to analyze the silicon and diamond gray scales to determine volume % of each.

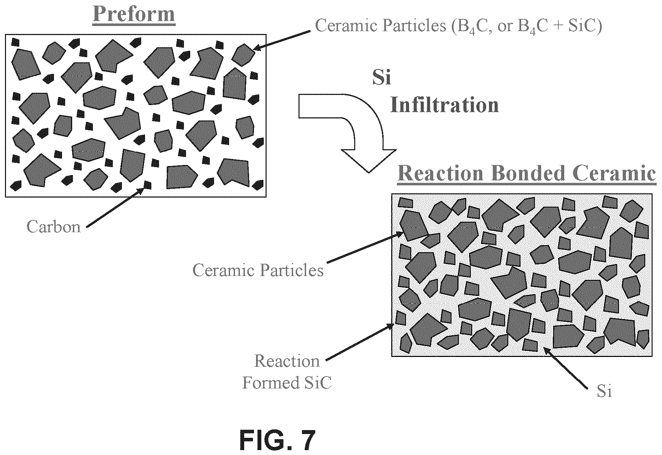

Other ceramic materials are also contemplated, including, but not limited to RB-B4C, which, as described herein, may be a low Si version of RB-B4C. This material may be 100% by weight B₄C (plus carbon), or a mixture of SiC and B₄C (plus carbon). The amount of B₄C in a mixture of SiC and B₄C may vary, with a wide range of B₄C : SiC preform ratios that may be utilized, including from about 0% to about 80% by weight (or more) SiC. In some embodiments, percents by weight of about 1% to about 80% SiC, about 1% to about 70% SiC, about 1% to about 50% SiC, about 10% to about 80% SiC, about 10% to about 70% SiC or about 10% to about 50% SiC may be utilized. In further embodiments, a high amount of B₄C can be utilized, such as up to 75%, 85% or 90% by weight B₄C., up to and including 100% by weight. As described herein for RB-SiC, diamond powder can also be added to the RB-B4C system to make it "Si-free". FIG. 7 is a diagram of conventional reaction bonded boron carbide (RB-B4C). Referring to Figure 7, reaction bonded B₄C ceramics are produced by the reactive infiltration of molten Si into preforms of ceramic particles + carbon (where, in this instance, the ceramic particles may be B₄C or B₄C + SiC). Upon infiltration, the molten Si reacts with the carbon to form additional SiC (Si + C → SiC), bonding the structure together. The final composite consists of the ceramic particles, reaction formed SiC and residual Si. FIG. 3 (which is discussed above) shows a diagram of the reaction bonding process as disclosed herein utilizing diamond powder in the preform and utilizing different ceramics such as SiC and/or B₄C.

Properties of the two materials are listed in Table 2 below.

**Table 2**

| **Property** | **RB-SiC** | **RB-B₄C** |
|---|---|---|
| Grade | SSC-702 | RBBC-751 |
| Density (g/cc) | 2.95 | 2.56 |
| Young's Modulus (GPa) | 350 | 400 |
| CTE, 20-100°C (ppm/K) | 2.9 | 4.8 |
| Thermal Cond. (W/m-K) | 170 | 50 |
| Flexural Strength (MPa) | 270 | 280 |
| Knoop 2 kg Hardness (kg/mm²) | 1100 | 1550 |

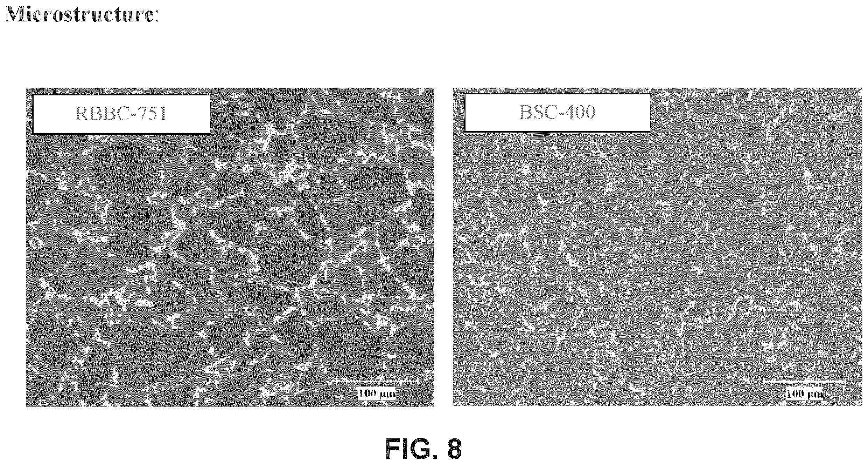

In FIG. 8, microstructures of RB-B4C materials are shown. Differences can be seen between the material denoted RBBC-751 in the figure, which is made from a preform of 100% B₄C and the material denoted BSC-400 in the figure, which is made from a preform containing a mixture of SiC and B₄C (40 wt% SiC plus 60 wt% B₄C). For the material denoted BSC-400, the lighter colored particles are B₄C, and the darker, small particles are SiC.

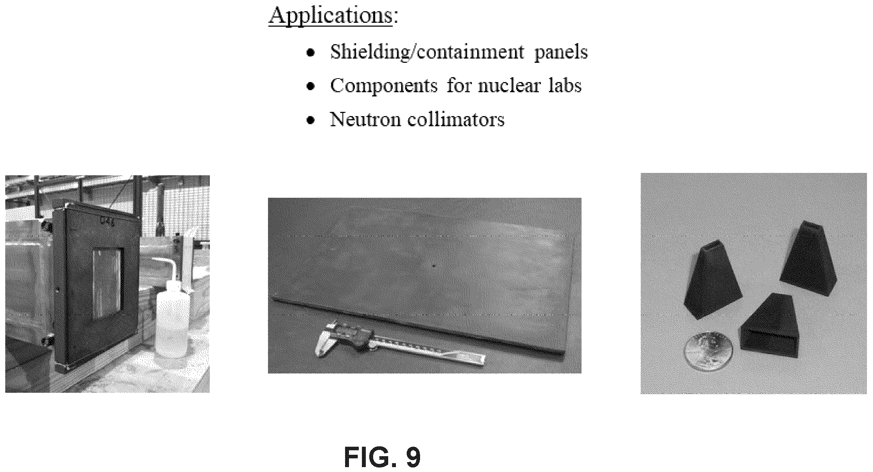

Examples of applications for RB-B4C materials are shown in FIG. 9. In some embodiments, reaction bonded B₄C is used for neutron absorbing applications. Low Si RB-B4C as described herein is an advantageous nuclear material and is valuable in neutron absorbing applications (B₄C collects neutrons). The presence of Si in these types of materials is less advantageous due to Si swelling in the neutron flux. By reacting away the Si with diamond, as described herein, this problem is alleviated. Attributes for these materials include, but are not limited to, high B₄C content (one example: 75% B₄C, 10% SiC, 15% Si by weight); large size and complex shape capability; and electrical conductivity for EDM machining. Applications include, but are not limited to, shielding/containment panels; components for nuclear labs; and neutron collimators.

In some embodiments, a method is disclosed which produces RB-SiC ceramic with nominally zero residual Si (e.g. "Si-free") by utilizing diamond powder that has a particle size of ≤ 8 µm. Method steps include, but are not limited to: adding a small quantity of diamond to SiC preform; infiltrating molten Si where Si + Diamond reaction is slow to create an infiltrated preform; holding the infiltrated preform at temperature in a furnace after infiltration to allow Si + Diamond → SiC reaction to occur, thus eliminating Si phase. In some embodiments, the diamond particles are of sufficiently small size to completely react to SiC during process, leaving no residual diamond (good for applications where final machining is needed). In further embodiments, diamond particles are large enough to yield a halo effect (e.g., diamond core with SiC coating) after processing. This is good for applications where a ceramic with enhanced hardness is desired (armor, wear, etc.). The disclosed methods result in materials that may be used as Si-free RB-SiC semiconductor process components (showerheads, focus rings, chamber liners); Si-free RB-SiC wear/refractory/corrosion components (for use in mining, petro-chem, oil and gas exploration, furnace liners, etc.); and/or Si-free RB-SiC (or RB-B4C) for armor tile applications.

Preforms are made with a blend of ceramic particles (such as SiC and/or B₄C). Preforms may be made as green parts by a variety of methods such as with a loose mix of the dry powders, or by making a slurry with water and a carbon based binder which is shaped in a mold (or cast into a brick for later machining). The slurry is frozen, dried or both in order to remove solvent and solidify the green part. Then a drying/carbonization procedure takes place; this may occur under a nitrogen atmosphere. In some embodiments, the temperature range for this step is from about 500°F to about 700°F. During the carbonization procedure the carbon based binder is broken down (pyrolyzed).

The diamond powder utilized may have a variety of particle sizes. In some embodiments, the particle size of the diamond powder is between about 3 µm and 15 µm; in other embodiments, the particle size of the diamond powder is between about 3 µm and 10 µm; about 3 µm and 9 µm; about 3 µm and 8 µm; about 3 µm and 7 µm; about 3 µm and 6 µm; or about 3 µm and 5 µm. In one embodiment, the particle size of the diamond powder is less than 15 µm; in another embodiment, the particle size of the diamond powder is between less than 10 µm. As discussed above, the use of small particles (< 8 µm) allows all diamond to be fully reacted to SiC. With larger diamond particles (> 8 µm), a halo of SiC forms, leaving some residual diamond. However, residual diamond may be favorable, depending on the application (e.g. higher hardness materials).

The amount of diamond powder is generally less than 20% by weight. In some embodiments the amount is between 15-20% by weight; between about 10-15% by weight; between about 5-10% by weight; or less.

As discussed above, both low Si and low residual diamond is preferred. However, low Si is best for performance and low residual diamond is best for machinability. A balance between the two may be determined based on the desired application.

In some embodiments, a majority of the diamond powder in the preform is reacted. In some embodiments, about 75% or more of the diamond is reacted; about 85% or more of the diamond is reacted; about 95% or more of the diamond is reacted.

In the disclosed materials, a low final Si amount (low residual Si phase) in in the "Si-free" material correlates with 10% by weight or below of Si remaining, with a lower limit of 0% Si (none detectable). In some embodiments, 9% by weight or below of Si is remaining; 8% by weight or below of Si is remaining; 7% by weight or below of Si is remaining; 6% by weight or below of Si is remaining; 5% by weight or below of Si is remaining; 4% by weight or below of Si is remaining; 3% by weight or below of Si is remaining; 2% by weight or below of Si is remaining; 1% by weight or below of Si is remaining; 0.5% by weight or below of Si is remaining; or 0.1% by weight or below of Si is remaining. In some embodiments, there is no detectable Si present (0% remaining).

Implementations as described herein may relate to the following: A method of producing reaction bonded silicon carbide (RB-SiC) ceramic components is described. In some embodiments, methods as described herein may utilize diamond powder within the preform.

The present application claims priority of U.S. Patent Application No. 18/735,560 filed on June 6, 2024. The entire disclosure of this application is hereby explicitly incorporated by reference into the present application.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "etc.", "e.g.," and "for example" set off lists of one or more non-limiting examples, instances, or illustrations.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method of making reaction bonded silicon carbide (RB-SiC) material with low residual Si comprising:
producing a SiC + carbon preform that includes diamond powder;
infiltrating said preform with molten Si to produce an infiltrated preform; and
maintaining said infiltrated preform in a furnace allowing the Si + Diamond → SiC reaction to occur.

2. The method of claim 1, wherein a majority of the diamond is reacted.

3. The method of claim 2, wherein 75% or more of the diamond is reacted.

4. The method of claim 3, wherein 85% or more of the diamond is reacted.

5. The method of claim 4, wherein 95% or more of the diamond is reacted.

6. The method of any one of claims 1 to 5, wherein said low residual Si correlates to 10% by weight or below of Si remaining.

7. The method of any one of claims 1 to 6, wherein said low residual Si correlates to 5% by weight or below of Si remaining.

8. The method of any one of claims 1 to 7, wherein said low residual Si correlates to no detectable Si remaining.

9. The method of any one of claims 1 to 8, wherein said diamond powder has a particle size of between about 3 µm and 15 µm.

10. The method of any one of claims 1 to 9, wherein said diamond powder has a particle size of between about 3 µm and 10 µm.

11. The method of any one of claims 1 to 10, wherein additional carbon is added to the preform before the reaction.

12. The method of claim 11, wherein said additional carbon is added by soaking the preform in a solution of an organic material.

13. The method of any one of claims 1 to 12, wherein the preform also contains B₄C.

14. The method of claim 13, wherein the B₄C : SiC ratio in the preform is from about 0% to about 80% SiC by weight.

15. A reaction bonded silicon carbide (RB-SiC) ceramic component made by the method of any one of claims 1 to 14.
